# EUROPÄISCHE PATENTSCHRIFT

(11) **EP 1 767 475 B1**
(45) Veröffentlichungstag und Bekanntmachung des Hinweises auf die Patenterteilung: **26.01.2011**
(21) Anmeldenummer: 06018812.5
(22) Anmeldetag: 08.09.2006
(51) Int. Cl.: B65G 47/82, C03B 35/10

(54) **Vorrichtung zum Überschieben von Gegenständen von einem Förderband auf ein anderes Förderband**
Device for pushing articles from a conveyor belt to another
Dispositif pour pousser des articles d'un convoyeur à bande à un autre

(30) Priorität: 23.09.2005 DE 102005045725
(43) Veröffentlichungstag der Anmeldung: 28.03.2007
(73) Patentinhaber: Asemissen, Marie-Luise, 33818 Leopoldshöhe (DE); Becker, Christian, 32049 Herford (DE); Becker, Martin, 31675 Bückeburg (DE)
(72) Erfinder: Becker, Dr.-Ing., Kurt, 31683 Obernkirchen (DE)
(74) Vertreter: Sobisch, Peter

(56) Entgegenhaltungen:
- DE-B1- 2 316 467
- US-A- 1 454 520
- US-A- 1 612 215

## Beschreibung

Die Erfindung bezieht sich auf eine Vorrichtung entsprechend dem Oberbegriff des Anspruchs 1 und dem Oberbegriff des Anspruchs 2. Eine solche Vorrichtung ist aus der DE 2 316 467 bekannt.

Vorrichtungen dieser Art finden in unterschiedlichsten Funktionszusammenhängen Anwendung, wo immer es um Transportaufgaben im Rahmen von Produktionsprozessen geht. Entsprechend der Art der zu bewegenden Gegenstände, jedoch auch der Anordnung der beiden Förderbänder, deren Fördergeschwindigkeiten usw. ergeben sich unterschiedliche technische Problemstellungen. Im Zuge ständig gesteigerter Durchsätze von Produktions-anlagen tritt das Ziel einer dem angepassten, möglichst schonenden und insbesondere sicheren Handhabung der zu fördernden Gegenstände in den Vordergrund. Die ist von besonderer Bedeutung bei Änderungen der Förderrichtung, die mit dem Übergang von einem ersten auf ein zweites Förderband verbunden sind.

Eine Fördersituation dieser Art in einer Horizontalebene ist beispielsweise zwischen einem, die Ausgangsprodukte einer Glasformmaschine führenden ersten und einem zweiten, sich senkrecht zu dem ersten erstreckenden, in einen Kühlofen einmündenden Förderband gegeben. Die in einer Reihe hintereinander auf dem ersten Förderband aufstehenden Glasgegenstände gelangen auf das zweite, regelmäßig mit einer geringeren Geschwindigkeit als das erste betriebene Förderband gruppenweise, somit in einer Nebenein-anderanordnung. Infolge der während der Überführung auf die Glasgegenstände einwirkenden Trägheitskräfte, jedoch auch der vergleichsweise geringen Standsicherheit derselben muß ein besonderes Augenmerk auf eine sichere, eine definierte Position wahrende Führung gerichtet werden. Definierte Abstände sind auch von großer Bedeutung für die in dem Kühlofen eingerichtete Wärmebehandlung.

Aus der eingangs erwähnten DE 23 16 467 ist eine vergleichbare Vorrichtung bekannt. Das Überschieben der Glasgegenstände wird mittels eines sich parallel zu dem ersten Förderband erstreckenden Schiebebalkens bewirkt, der an seinen beiden Enden über Parallellenker gleicher Länge in einer Horizontalebene schwenkbar gelagert ist, und zwar zwischen einer ersten Position seitlich neben dem ersten Förderband und einer zweiten Position auf dem zweiten Förderband. Zum Antrieb des Schiebebalkens ist ein Kurbeltrieb mit einer Pleuelstange vorgesehen, die sich stets unter einem Winkel zu dem Schiebebalken erstreckt, so dass sich die Grundanordnung eines geschränkten Kurbeltriebes ergibt. Die Parameter dieses Antriebssystems, nämlich Kurbel- und Pleuellänge sowie der Winkelbereich zwischen der Pleuelstange und den Lenkern sind mit der Maßgabe gewählt, dass sich der Schiebebalken zu Beginn des Überschiebe-vorgangs in der Förderrichtung des ersten Förderbandes und gegen Ende in der Richtung des zweiten Förderbandes bewegt. Nennenswerte Querbewe-gungen zu Beginn des Überschiebevorgangs hinsichtlich des ersten Förderbandes und gegen Ende des Überschiebevorganges hinsichtlich des zweiten Förderbandes werden jedenfalls vermieden. Der Schiebebalken ist ferner um eine sich parallel zu der Förderrichtung des ersten Förderbandes erstreckende Achse schwenkbar, so dass bei gleichförmig umlaufendem Kurbeltrieb gegen Ende eines Überschiebevorganges eine Rückführung in eine Position seitlich neben dem ersten Förderband ermöglicht wird, ohne dass Glasgegenstände umgestoßen werden, die auf dem ersten Förderband in einer Hintereinanderanordnung gleichförmig weiter transportiert werden. Ein Antriebsmotor ist für eine synchrone Bewegung des Kurbeltriebes sowie der zyklischen Verschwenkung des Schiebebalkens um die genannte Achse vorgesehen.

Aus der US 2 601 914 ist eine weitere Vorrichtung zum Überschieben von Gegenständen von einem ersten Förderband auf ein zweites, sich senkrecht zu dem ersten erstreckendes Förderband bekannt, wobei die Gegenstände auf dem ersten Förderband in einer Reihe hintereinander angeordnet sind und gruppenweise mittels eines Schiebebalkens auf das zweite Förderband geschoben werden. Der Schiebebalken ist zu diesem Zweck an zwei unterschiedlich lang bemessenen Hebeln angelenkt, deren einer umlaufend nach Art einer Kurbel antreibbar ist, wohingegen der andere eine lediglich oszillatorische Bewegung um eine Achse ausführt. Die aus diesen Hebeln bestehende Anordnung befindet sich auf der, dem zweiten Förderband gegenüberliegenden Seite des ersten Förderbandes. Die Bemessung der Längen der beiden Hebel sowie die Lage deren Drehachsen relativ zu dem ersten Förderband sind mit der Maßgabe angelegt, dass der zu Beginn einer Überschiebebewegung sich parallel zu der Reihe der Gegenstände erstreckende Schiebebalken in dieser Orientierung relativ zu den Gegen-ständen bis zum Abschluss der Überschiebebewegung verbleibt, nämlich bis zu einer solchen Drehwinkelstellung des kurbelartigen Hebels, in der dieser sich senkrecht zu dem Schiebebalken erstreckt. Im Anschluß an diese Drehwinkel-stellung entfernt sich der Schiebebalken - an seinem, der Förderrichtung des ersten Förderbandes stromaufwärts gelegenen Ende beginnend - von den Gegenständen, so dass deren Reihe durch das erste Förderband behinderungsfrei weiter bewegt werden und ein neuer Überschiebezyklus eingeleitet werden kann. Die Bewegung des Schiebebalkens ist somit als eine in sich geschlossene Kurve angelegt, so dass in Abkehr von der erstgenannten Vorrichtung ein besonderer Antrieb zur Überführung des Schiebebalkens in die Ausgangstellung am Ende eines Überschiebezyklus entfällt.

Aus der DD 0151 739 ist eine weitere vergleichbare Vorrichtung bekannt. Es handelt sich im konkreten Fall um das Überschieben von Glasgegenständen von einem ersten auf ein zweites, in einen Kühlofen führendes Förderband, wobei ein Schiebebalken auf einem Kreuzschlitten angeordnet ist, der sich auf der, dem zweiten Förderband gegenüberliegenden Seite des ersten Förderbandes befindet. Der Schiebebalken ist vertikal schwenkbar auf dem Kreuzschlitten angeordnet, der seinerseits zur Darstellung der eigentlichen Überschiebebewegung mit einer Viergelenkgetriebe bestehend aus einer Kurbel, einer Koppel und einer Schwinge in Verbindung steht. Aus der Bewegung der Koppel wird in einer definierten Winkelstellung über ein weiteres Hebelgetriebe zu Beginn der Rückführung des Schiebebalkens am Ende eines Überschiebezyklus eine Schwenkbewegung eingeleitet, so dass in dieser Bewegungsphase eine störungsfreie weitere Förderung der zu behandelnden Glasgegenstände möglich ist.

Sämtliche dieser vorbekannten Lösungen des Problems, Gegenstände von einem ersten gruppenweise in einer Hintereinanderanordnung auf ein zweites Förderband zu überführen, und zwar unter möglichst geringer mechanischer Beanspruchung und unter Wahrung reproduzierbarer Stellpositionen gestalten sich jedoch konstruktiv verhältnismäßig kompliziert und bieten kaum Ansätze mit Hinblick auf eine Variierung der Gestaltung einer Überführungskurve für die Gegenstände.

Weitere Lösungen des Problems, eine positionsgenaue Überführung der Gegenstände darzustellen, und zwar nach Maßgabe einer definierten Überführungskurve sind aus der DE 691 31 804 und gleichermaßen der US 4 660 711 bekannt. Hierbei ist ein Schlitten entlang zweier, sich senkrecht zueinander erstreckender Führungen verschiebbar angeordnet, wobei jeder Führung ein programmierbarer motorischer Antrieb zugeordnet ist, so dass nahezu jede gewünschte Überführungskurve durch dementsprechende Programmierung der durch die beiden Antriebe generierten Teilbewegungen darstellbar ist, aus deren Überlagerung sich die Überführungskurve ergibt. Eine solche Lösung ist zwar durch eine hohe Flexibilität hinsichtlich der Gestaltung der Überführungskurve gekennzeichnet, jedoch auch als aufwendig und teuer anzusehen.

Es ist vor diesem Hintergrund die Aufgabe der Erfindung, eine Vorrichtung der eingangs bezeichneten Art zu entwerfen, die bei Ausübung einer exakten Führungsfunktion auf die zu handhabenden Gegenstände zahlreiche Parameter zur konstruktiven Variierung einer Bewegungskurve aufweist und sich durch einen im Vergleich mit dem eingangs dargelegten Stand der Technik einfacheren Aufbau auszeichnet. Gelöst ist diese Aufgabe bei einer solchen Vorrichtung alternativ durch die Merkmale der Kennzeichnungsteile der Ansprüche 1 oder 2.

Es wird ein aus wenigstens zwei, untereinander gleich beschaffenen, mit Abstand voneinander angeordneten Getriebeeinheiten zusammengesetztes Getriebe benutzt, wobei jede Getriebeeinheit aus zwei Schwingen besteht, so dass sich jeweils die Konfiguration eines Viergelenk-Getriebes ergibt.

Zumindest eine dieser beiden Getriebeeinheiten steht mit einem Antrieb in Verbindung und es sind die Bewegungen beider Getriebeeinheiten synchronisiert, wobei eine Koppelstange zur Synchronisation benutzt wird. Dies ist ein einfaches robustes Konstruktionsmittel. Jeweils ein Punkt einer der beiden Schwingen wird als Anbindungspunkt für eine mit dem Schiebebalken in Verbindung stehende Stützstruktur benutzt, so dass aus der, durch den genannten Antrieb generierten Bewegung dieser Anbindungspunkte eine Bewegungskurve darstellbar ist, von der ein Teil als Überführungskurve für den Schiebebalken und damit die genannten Gegenstände nutzbar ist. Der genannte Antrieb umfasst vorzugsweise einen Kurbeltrieb, dessen Pleuelstange mit einer Schwinge der einen der beiden Getriebeeinheiten in Verbindung steht. Man erkennt , dass durch die Bemessung der Längen der beiden Schwingen sowie der Abstände deren fester Auflagerungspunkte voneinander zahlreiche konstruktive Parameter zur Gestaltung der Bewegungskurve zur Verfügung stehen, zu denen noch die Drehzahl des Antriebs hinzutritt. Man erkennt ferner, dass das Getriebe, insbesondere die genannten Getriebeeinheiten aus sehr einfachen Maschinenelementen, nämlich Schwingen und vergleichbaren Elementen aufbaubar sind, wobei lediglich ein Antrieb zur Generierung einer regelmäßig in einer Horizontalebene eingerichteten Bewegungskurve erforderlich ist. Es handelt sich insgesamt um eine kostengünstig realisierbare, robuste Konstruktion.

Eine jede der Getriebeeinheiten ist durch ein entweder als Plattform oder durch eine Schwinge und einen mit dieser in fester Verbindung stehenden Hebel verkörpertes Verbundsystem gekennzeichnet, welches mit Gelenklagern versehen ist, über welche die Schwingen einer jeden Getriebeeinheit gelenkig untereinander in Verbindung stehen. Dies eröffnet konstruktiv einfach realisierbare Möglichkeiten zur Darstellung der Anbindungspunkte der Stützstruktur des Schiebebalkens.

Die Überführungskurve ist unmittelbar mit der Koppelstange darstellbar. Dies bedeutet, dass sich die genannten Anbindungspunkte der Stützstruktur beispielsweise unmittelbar auf der Koppelstange befinden können.

Gemäß den Merkmalen der Ansprüche 3 bis 5 ist der Schiebebalken zusätzlich um eine sich parallel zu dem ersten Förderband erstreckende Achse schwenkbar angeordnet, wobei es sich bei dieser Achse vorzugsweise um die Achse der Koppelstange handelt. Der durch die, dem Getriebe zugeordneten, in einer Horizontalebene positionierten Bewegungskurve ist somit eine Schwenkkurve in einer Vertikalebene überlagert, wobei diese Schwenkkurve der Rücküberführung des Schiebebalkens im Rahmen eines Überführungszyklus gegen Ende der Überführungskurve dient und dementsprechend mit der Maßgabe angelegt ist, dass ein kontinuierlicher Vorschub der Gegenstände auf dem ersten Förderband durch die gruppenweise Überführung nicht behindert wird. Die Betriebe des Antriebs des Getriebes sowie des Schwenkantriebes sind somit steuerungstechnisch durch den überführungszyklus miteinander verknüpft.

Die durch den Antrieb des Getriebes in einer Horizontalebene generierte Bewegungskurve ist entsprechend den Merkmalen des Anspruchs 6 eine geschlossene Kurve, von der ein Teilstück unmittelbar als Überführungskurve genutzt wird.

Entsprechend den Merkmalen des Anspruchs 7 ist jede der Plattformen mit drei Gelenklagern versehen, welche zueinander parallele Achsen aufweisen, die sich somit regelmäßig vertikal erstrecken. Diese Gelenklager dienen der Anbindung der beiden Schwingen der Getriebeeinheiten sowie der Endpunkte der Koppelstange.

Gemäß den Merkmalen des Anspruchs 8 ist der Schwenkantrieb für die Stützstruktur des Schiebebalkens mit der Maßgabe angeordnet, dass er sich zusammen mit diesem entlang der Überführungskurve bewegt.

Die Merkmale der Ansprüche 9 und 10 sind auf die steuerungstechnische Verknüpfung des Antriebs des Getriebes, des Schwenkantriebs sowie des Antriebs eines Förderbandes gerichtet. Insbesondere die beiden erstgenannten Antriebe stehen über den Ablauf eines Überschiebezyklus miteinander in Verbindung, der ausgehend von dem Beginn der Überführungskurve über das Ende der Überführungskurve, den Beginn eines Schwenkvorgangs um die Achse der Koppelstange und das Ende des Schwenkvorgangs zurück zu dem Anfangspunkt der Überführungskurve führt.

Der Antrieb des Getriebes ist in jedem Fall drehzahlregelbar ausgebildet, um entlang der Überschiebungskurve ein optimales Geschwindigkeitsprofil bereitstellen zu können. Besonders kann auch die Möglichkeit eingerichtet werden, den Überführungsvorgang mit der Maßgabe einzurichten, dass nach jedem Überschiebezyklus die Platzierung der nächsten folgenden Gruppe der zu verschiebenden Gegenstände auf dem zweiten Förderband versetzt zu der jeweils vorrangegangenen Gruppe erfolgt.

Die Erfindung wird im Folgenden unter Bezugnahme auf das in den Zeichnungen wiedergegebene Ausführungsbeispiel näher erläutert werden. Es zeigen:
Fig. 1 eine Anordnung zweier, zum Transport von Gegenständen bestimmter Förderbänder, bei welcher die erfindungsgemäße Vorrichtung Anwendung findet;
Fig. 2 eine perspektivische schematische Darstellung der Vorrichtung;
Fig. 3 eine Darstellung eines konstruktiven Ausführungsbeispiels einer erfindungsgemäßen Vorrichtung in der Draufsicht;
Fig. 4 eine Darstellung einer Ansicht der gezeigten Vorrichtung entsprechend einer Blickrichtung IV der Fig. 3;
Fig. 5 eine Darstellung einer Ansicht der Vorrichtung entsprechend einer Blickrichtung V der Fig. 4.

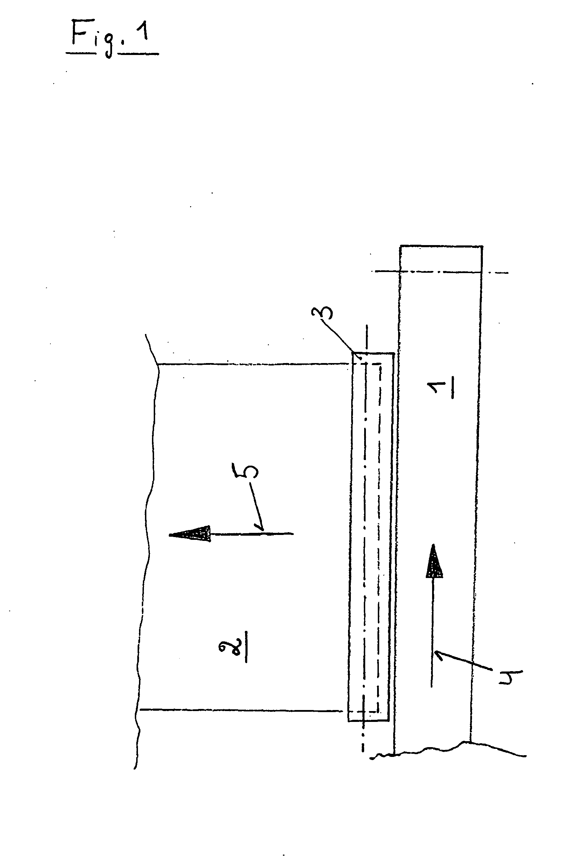

Fig. 1 zeigt in der Draufsicht zwei in einer Horizontalebene angeordnete, sich senkrecht zueinander erstreckende Förderbänder 1, 2, die über eine Überschiebeplatte 3 untereinander in Verbindung stehen. Diese Überschiebeplatte 3 überdeckt das zweite Förderband 2 geringfügig.

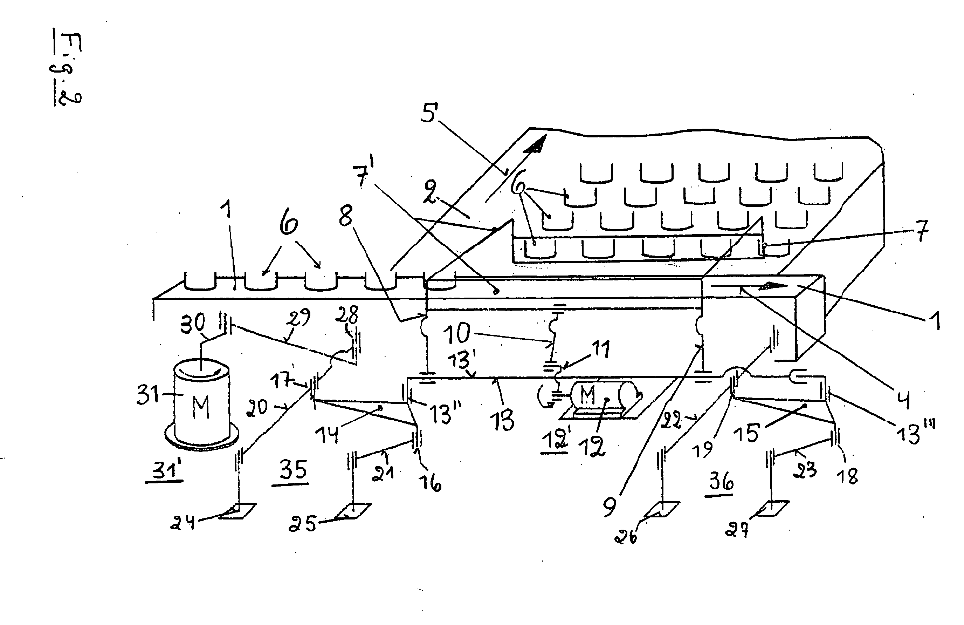

Auf dem Förderband 1 befinden sich in einer Reihe in dessen Förderrichtung 4 hintereinander angeordnete, einen definierten Abstand voneinander aufweisende Gegenstände 6 (Fig. 2), die unter Bildung von Gruppen auf das mit einer geringeren Geschwindigkeit betriebene Förderband 2 zu überführen sind. Auf dem Förderband 2 wird somit eine aus Gruppen der Gegenstände 6 bestehende Reihe gebildet, wobei die sich parallel zueinander erstreckenden Gruppen auf dem Förderband 2 in dessen Förderrichtung 5 einen definierten Abstand voneinander aufweisen.

Der Zweck der erfindungsgemäßen Vorrichtung besteht darin, eine takt- und gruppenweise Überschiebebewegung zu bewirken, und zwar unter sicherer Führung der Gegenstände 6 sowie unter Wahrung der vorstehend genannten Abstände sowohl zwischen den Gruppen als auch der Gegenstände 6 innerhalb einer jeden Gruppe untereinander.

Praktisch kann es sich bei dem Förderband 1 beispielsweise um ein solches handeln, auf welchem die in einer Glasformmaschine hergestellten Hohlglasartikel in einer Reihe hintereinander ausgetragen werden, die anschließend einer Wärmebehandlung in einem Kühlofen unterzogen werden. Das Förderband 2 transportiert diese Hohlglasartikel somit nach Maßgabe einer Geschwindigkeit, die an den Zeitbedarf für die Wärmebehandlung angepasst ist, durch den (nicht gezeigten) Kühlofen.

Besonders zu beachten ist die häufig geringe Standsicherheit der zu handhabenden Hohlglasartikel, welche mit zunehmender Geschwindigkeit der Förderbänder 1, 2 eine besonders sorgfältige, den Einfluss von Trägheitskräften während der Überführung berücksichtigende Ausgestaltung der Überführungskurve sowie der die Hohlglasartikel berührenden Funktionselemente erforderlich macht.

Fig. 2 zeigt in perspektivischer schematischer Darstellung die erfindungsgemäße Vorrichtung in ihrer Zuordnung zu zwei, sich in einer Horizontalebene senkrecht zueinander erstreckenden Förderbändern 1, 2, wobei die Gegenstände 6 auf dem Förderband 1 in einer Hintereinanderanordnung gefördert werden. Auf dem Förderband 2 werden infolge der Überschiebebewegung jeweils Gruppen von fünf nebeneinander angeordneten Gegenständen 6 gebildet, wobei diese Gruppen in der Förderrichtung 5 bewegt werden.

Mit 7 ist ein Schiebebalken bezeichnet, der auf seiner, den Gegenständen 6 zugekehrten Seite in an sich bekannter Weise eine kammartige Ausgestaltung aufweist, welche in ihren Abmessungen an die zu handhabenden Gegenstände angepasst und zur Ausübung einer Führungswirkung in Längsrichtung dieses Schiebebalkens geeignet ist. Auf eine Detaildarstellung des somit an sich bekannten Schiebebalkens 7 ist aus Gründen der zeichnerischen Einfachheit verzichtet worden.

Der Schiebebalken 7 ist unter Zwischenanordnung eines Bügels 7' an zwei, sich senkrecht zu diesem erstreckenden, an dessen jeweiligen Enden angeordneten Auslegern 8, 9 auf einer Koppelstange 13, um deren Achse 13', die sich parallel zu dem Förderband 1 erstreckt, schwenkbar abgestützt. Die Bügel 7' bilden in Verbindung mit den Auslegern 8, 9 die Stützstruktur des Schiebebalkens 7.

Mit 10 ist eine Pleuelstange bezeichnet, deren eines Ende an dem Bügel 7' und deren anderes Ende an einer Kurbel 11 angelenkt ist, die unmittelbar mit einem Elektromotor 12 in Antriebsverbindung steht.

Der aus der Kurbel 11 sowie dem Elektromotor 12 bestehende Antrieb 12' dient dazu, den Schiebebalken 7 am Ende eines Überschiebezyklus in eine Ausgangslage zurückzuführen, und zwar unter Schwenkung um die Achse 13'. Hierauf wird im Folgenden noch näher eingegangen werden.

Die Enden der Koppelstange 13 sind jeweils über Gelenklager 13", 13"', deren Achsen sich senkrecht zu der Achse 13'erstrecken, jeweils auf einer Plattform 14, 15 gelagert, welche ihrerseits jeweils über Gelenklager 16, 17 bzw. 18, 19 an Schwingen 20, 21 bzw. 22, 23 gelagert ist. Die, den Gelenken 16, 18 abgekehrten Enden der Schwingen 21 und 23 sind in ortsfest angeordneten Lagern 25, 27 gestützt. Die jeweils einen Enden der Schwingen 20, 22 sind ebenfalls in ortsfesten Lagern 24, 26 gestützt. Das andere Ende der Schwinge 20 steht über ein Gelenk 28 mit der Pleuelstange 29 einer Kurbel 30 in Verbindung, die durch einen Elektromotor 31 antreibbar ist. Der durch den Elektromotor 31 gebildete Antrieb 31' dient in Verbindung mit dem vorstehend beschriebenen Getriebeelementen der Darstellung einer horizontalen Bewegungskurve des Schiebebalkens 7.

Die Achsen der Gelenke 16 bis 19, der Lager 24 bis 27, des Gelenkes 28, der Schwenklager 13", 13"' sowie des Elektromotors 31 verlaufen parallel zueinander.

Die mit den, jeweils einen Anbindungspunkt für die Stützstruktur des Schiebebalkens 7 bildenden Schwenklager 13", 13"' der Koppelstange 13 in Verbindung stehenden, jeweils aus den Schwingen 20, 21; 22, 23 sowie den Plattformen 14, 15 bestehenden Getriebeeinheiten 35, 36 sind untereinander gleich bemessen und es befinden sich die Lager 24 bis 27 auf einer sich parallel zu dem Förderband 1 erstreckenden Linie. Beide Getriebeeinheiten 35, 36 bewegen sich somit bei einem gleichförmigen Betrieb des Antriebs 31' synchron zueinander, wobei - in einer Horizontalebene gesehen - eine Überführungskurve des Schiebebalkens 7 darstellbar ist, gemäß welcher dieser unter Wahrung einer Parallelerstreckung zu dem ersten Förderband 1 zunächst an dieses herangeführt wird, sich angenähert parallel und geschwindigkeitsgleich in dessen Förderrichtung 4 bewegt, um anschließend entlang einer Kurve, somit nach Maßgabe einer kontinuierlich zunehmenden Bewegungskomponente in der Förderrichtung 5 des Förderbandes 2 auf dieses hin zu schwenken, wobei sich am Ende dieser Schwenkbewegung eine zumindest angenäherte geschwindigkeitsgleiche Bewegungs in dieser Förderrichtung 5 ergibt. Auf diesem Wege lässt sich eine Überführungskurve nach Art eines Teilstückes einer Lemniskate darstellen.

Bei gleichförmigem Betrieb des Antriebs 31' ergibt sich eine geschlossene Bewegungskurve des Schiebebalkens 7 in einer Horizontalebene, wobei ein Teil dieser Bewegungskurve als Überführungskurve benutzt wird, wobei ein Anfangspunkt dieser Kurve - in der Förderrichtung 4 gesehen - rechtsseitig neben dem Förderband 1 liegt und wobei ein Endpunkt dieser Überführungskurve auf dem Förderband 2 liegt. Wesentlich ist, dass die Überführungskurve mit der Maßgabe angelegt ist, dass sich zum Zeitpunkt des Eingriffs in die Reihe der Gegenstände 6 auf dem Förderband 1 der Schiebebalken 7 nahezu geschwindigkeitsgleich mit den Gegenständen 6 in der Förderrichtung 4 bewegt und dass sich der Schiebebalken 7 zum Zeitpunkt des Lösens von der Gruppe der Gegenstände 6 auf dem Förderband 2 im wesentlichen geschwindigkeitsgleich mit diesem in der Förderrichtung 5 bewegt.

Der den Schiebebalken 7 mit den Auslegern 8, 9 verbindende Bügel 7' ist derart ausgebildet, dass er die in der Förderrichtung 4 des Förderbandes 1 während der Überführung einer Gruppe nachrückende Reihe der Gegenstände 6 übergreift, so dass deren weiterer Vorschub in der Förderrichtung 4 nicht behindert und ein kontinuierlicher Betrieb ermöglicht wird.

Gegen Ende der Überführungskurve wird durch Aktivierung des Antriebs 12' der Schiebebalken 7 um die Achse 13' der Koppelstange 13 rückwärts, dass heißt in einer Richtung von dem Förderband 2 weg in Richtung auf das Förderband 1 hin verschwenkt und gelangt schließlich wieder zurück zu dem vorstehend genannten Anfangspunkt der Überführungskurve, so dass ein neuer Überschiebezyklus beginnen kann.

Im Rahmen eines solchen Zyklus, der einer vollständigen Umdrehung der Kurbel 30 entspricht, ist somit der in einer Horizontalebene angeordneten Bewegungskurve der Koppelstange 13 eine Schwenkbewegung um deren Achse 13' gegen Ende eines Überschiebevorganges überlagert, ein Schwenkvorgang, der ein Anheben des Überschiebebalkens 7 aus dieser Horizontalebene heraus über die auf dem Förderband 1 nachrückende Reihe der Gegenstände 6 und ein erneutes Absenken bis in diese Horizontalebene einschließt, so dass der Schiebebalken, der genannten Bewegungskurve folgend, schließlich am Anfangspunkt der Überführungskurve ankommt.

Hieraus folgt, dass der Antrieb 12' mit Hinblick auf eine Schwenkbewegung ausgelegt ist, die den vorstehenden Randbedingungen Rechnung trägt.

Das Ende eines Überschiebevorgangs auf dem Förderband 2 kann in vielfältiger Weise, beispielsweise über Sensoren festgestellt werden, über welche eine taktweise Ansteuerung des Antriebs 12' auslösbar ist.

Die Geschwindigkeit des Antriebs 31', insbesondere die Drehzahl der Kurbel 30 ist in Anpassung an die Fördergeschwindigkeit des Förderbandes 1 angepasst, so dass ein taktweiser, durch eine Gruppenbildung auf dem Förderband 2 charakterisierter Überschiebebetrieb sichergestellt ist. Wesentlich ist, dass unter Verwendung dieser Vorrichtung beide Förderbänder 1, 2 nach Maßgabe gleichförmiger Fördergeschwindigkeiten betrieben werden können, so dass die Vorrichtung für einen quasi kontinuierlichen Betrieb angelegt ist.

Die Abtriebsdrehzahl des Antriebs 31' ist in jedem Fall regelbar, so dass eine einfache Anpassung des Arbeitszyklus an die Fördergeschwindigkeiten der Förderbänder 1, 2 und damit den Produktionsprozess gegeben ist.

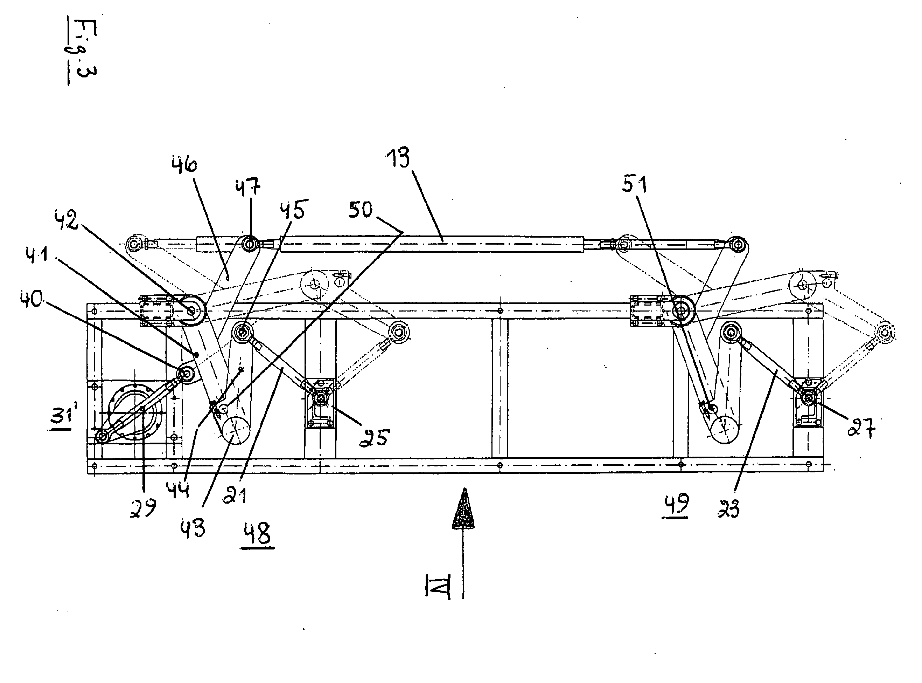

Eine konstruktives, im wesentlichen nach den vorstehenden Funktionsprinzipien eingerichtetes Ausführungsbeispiel wird im Folgenden unter Bezugnahme auf die Figuren 3 bis 5 beschrieben werden, wobei Funktionselemente, die mit denjenigen der Fig. 2 übereinstimmen, mit gleichen Bezugsziffern bezeichnet sind, so dass auf eine wiederholte detaillierte Beschreibung verzichtet werden kann.

Ein als Kurbeltrieb ausgebildeter Antrieb 31' ist über seine Pleuelstange 29 an einem Gelenk 40 einer Schwinge 41 angelenkt, die an ihrem einen Ende in einem Lager 42 ortsfest gelagert ist und deren anderes Ende über ein Gelenk 43 mit einem Zwischenhebel 44 in Verbindung steht. Das Gelenk 40 ist geringfügig außermittig zwischen dem Gelenk 43 und dem Lager 42 an der Schwinge 41 angeordnet. Der Zwischenhebel 44 steht über ein Gelenk 45 mit dem Ende einer Schwinge 21 in Verbindung, deren anderes Ende in einem Lager 25 ortsfest gelagert ist.

Mit der Schwinge 41 in fester Verbindung steht ein Hebel 46, der sich unter einem spitzen Winkel zu dieser Schwinge erstreckt. An dem Ende des Hebels 46 befindet sich ein Gelenk 47, welches den Anbindungspunkt einer Koppelstange 13 bildet.

Die Achsen sämtlicher Gelenke 40, 43, 45, 47 sowie der Lager 25, 42 verlaufen parallel zueinander und es bilden die Schwingen 21, 41 sowie der Zwischenhebel 44 eine erste Getriebeeinheit 48, die über die Koppelstange 13 mit einer zweiten, bis auf das Fehlen eines, zur Herstellung einer Antriebsverbindung mit einem Antrieb, hier dem Antrieb 31' bestimmten Gelenkes 40 identischen zweiten Getriebeeinheit 49 in Verbindung steht.

Man erkennt, dass eine gleichförmige Drehbewegung des Antriebs 31' in gleicher Weise wie bei der Darstellung gemäß Fig. 2 in eine oszillierende Bewegung der Schwinge 41 um die Achse des Lagers 42 umgesetzt wird, wobei sich aufgrund der Positionierung der beiden Getriebeeinheiten 48, 49, deren gleicher Beschaffenheit und deren Synchronisation über die Koppelstange 13 vergleichbare Bewegungsverhältnisse wie bei Fig. 2 ergeben. Insbesondere erkennt man eine formale Vergleichbarkeit der Plattformen 14, 15 gemäß Fig. 2 und der Verbundsysteme bestehend jeweils aus den Schwingen 41 und den Hebeln 46.

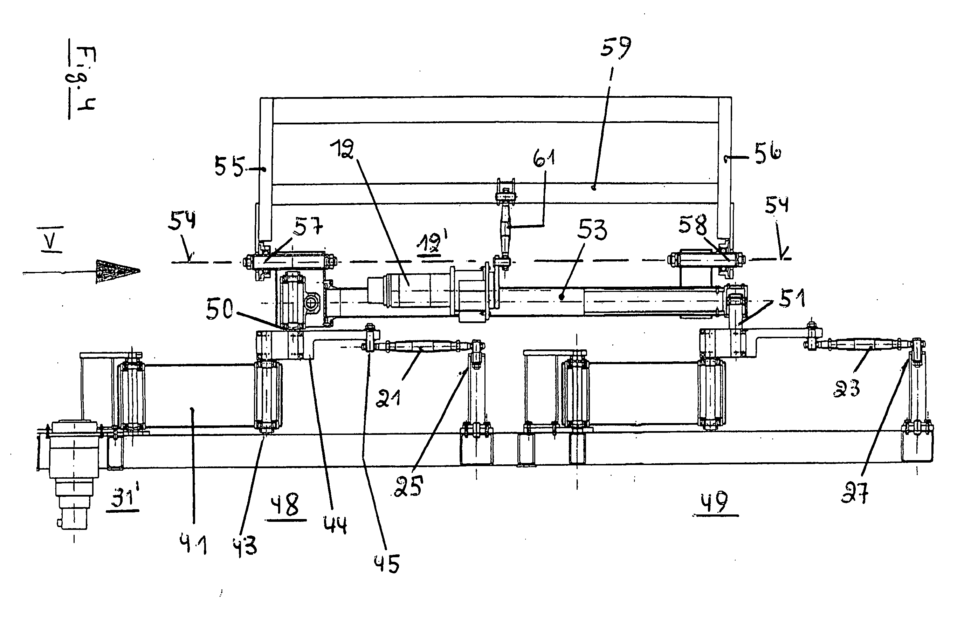

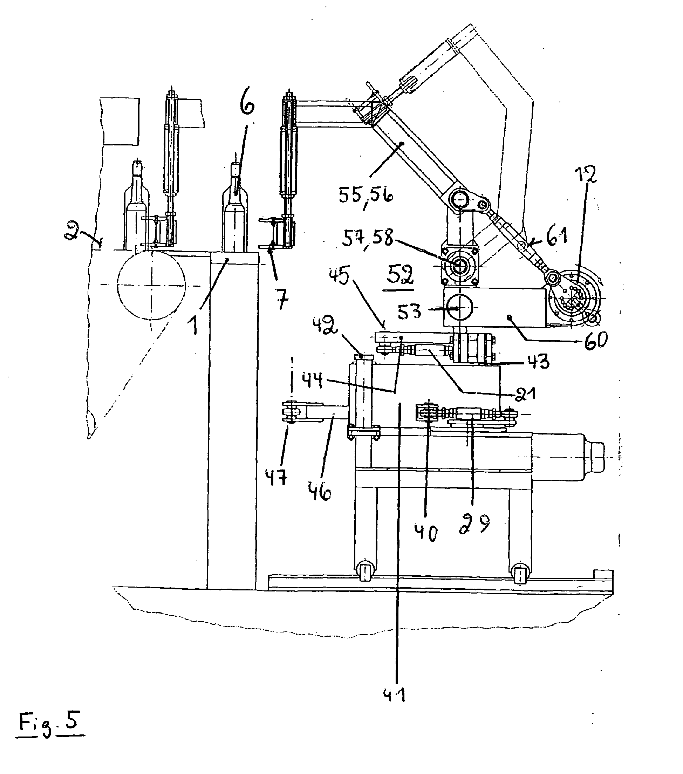

Mit 50, 51 sind in Fig. 3 die Anbindungspunkte einer Stützstruktur 52 für den Schiebebalken 7 bezeichnet, die sich auf dem Zwischenhebel 44 in unmittelbarer Nähe des Gelenkes 43 befinden und welche im Folgenden unter Bezugnahme auf die Figuren 4 und 5 näher beschrieben werden wird.

Die Stützstruktur 52 besteht aus einer Traverse 53, die sich parallel zu der Koppelstange 13 erstreckt und an den genannten Anbindungspunkten aufgelagert ist. Sie unterliegt somit den, durch den Antrieb 31' bewirkten Auslenkbewegungen in einer Horizontalebene, wobei ein Teil der auf diese Weise generierten Bewegungskurve erfindungsgemäß als Überführungskurve für die zu bewegenden Gegenstände 6 genutzt wird.

An den Enden der Traverse 53, und zwar um eine sich parallel zu dieser erstreckende Achse 54 sind Haltebügel 55, 56 in Lagern 57, 58 schwenkbar gelagert, an deren, der Traverse 53 abgekehrten Enden der Schiebebalken 7 befestigt ist. Die Haltebügel 55, 56 stehen ferner über wenigstens eine, sich parallel zu der Traverse 53 erstreckende Traverse 59 untereinander in Verbindung. Die Achse 54 erstreckt sich parallel zu der Koppelstange 13 bzw. zu der Förderrichtung 4.

An einem etwa mittigen Bereich der Traverse 53 ist ein sich horizontal erstreckender Ausleger 60 angebracht, an dessen Ende der Antrieb 12' befestigt ist. Dieser ist als Kurbeltrieb ausgebildet, der mit einem Elektromotor 12 in Antriebsverbindung steht und der über eine Pleuelstange 61 an der Traverse 59 der Stützstruktur 52 angelenkt ist. Der Antrieb 12' ist mit der Maßgabe angelegt, dass bei einer vollen Umdrehung die Stützstruktur 52 und mit dieser der Schiebebalken 7 um die Achse 54 um einen definierten Winkel geschwenkt, somit angehoben und anschließend wieder abgesenkt werden kann, wobei diese Schwenkbewegung der vorstehend genannten, in einer Horizontalebene abgewickelten Bewegungskurve überlagert ist, welche mittels der Getriebeeinheiten 48, 49 darstellbar ist. Diese Schwenkbewegung wird eingeleitet, nachdem das Ende der Überführungskurve erreicht ist, um während dieser Rückführung des Schiebebalkens 7 zu dem Anfangspunkt der Überführungskurve einen ungestörten, insbesondere kontinuierlichen Vorschub der auf dem Förderband 1 bewegten Gegenstände 6 zu ermöglichen.

## Patentansprüche

1. Vorrichtung zum gruppenweisen Überschieben von auf einem ersten horizontalen Förderband (1) in einer Reihe hintereinander angeordneten Gegenständen (6) auf ein zweites horizontales, sich senkrecht zu dem ersten erstreckendes Förderband (2), mit einem zum gleichzeitigen Überschieben jeweils einer Gruppe der Gegenstände bestimmten Schiebebalken (7), so dass auf dem zweiten Förderband (2) eine Reihe von hintereinander angeordneten Gruppen bestehend aus den genannten Gegenständen gebildet wird, wobei die genannten Gegenstände in jeder Gruppe in einer Reihe quer zu der Förderrichtung (5) des zweiten Förderbandes (2) angeordnet sind, und mit einem, mit einer Stützstruktur (7',8,9) für den Schiebebalken (7) in Wirkverbindung stehenden Getriebe, welches bei gleichförmigen Geschwindigkeiten der beiden Förderbänder (1,2) zur Darstellung einer zumindest teilweise als Überführungskurve für die genannten Gegenstände beginnend auf dem ersten Förderband (1) und endend auf dem zweiten Förderband (2) nutzbaren Bewegungskurve des Schiebebalkens (7) unter Beibehaltung einer Parallelstellung des Schiebebalkens (7) zu dem ersten Förderband (1) eingerichtet ist, wobei das Getriebe aus wenigstens zwei, untereinander gleich beschaffenen Getriebeeinheiten (35,36) besteht, wobei jede Getriebeeinheit (35,36) mit einem Anbindungspunkt (13", 13"') für die Stützstruktur (7',8,9) versehen ist, wobei die Bewegungen der Getriebeeinheiten (35,36) synchronisiert sind, wobei dem Getriebe zumindest ein Antrieb (31,31) zugeordnet ist, der über eine Pleuelstange (29) mit einer Getriebeeinheit (35) in Antriebsverbindung steht, wobei zur Synchronisation der Bewegungen der Getriebeeinheiten (35,36) diese über eine Koppel- stange (13) in Verbindung stehen, mittels welcher die genannte Über- führungskurve darstellbar ist und wobei die Stützstruktur (7',8,9) des Schiebbalkens (7) auf der Koppelstange (13) abgestützt ist, **dadurch gekennzeichnet, dass** jede der Getriebeeinheiten (35,36) aus einer Plattform (14,15) besteht, die über ein Gelenklager (17,19) an einer ersten Schwinge (20,22) gelagert ist, deren jeweiliges eines, dem Gelenklager (17,19) abgekehrtes Ende in ortfest angeordneten Lagern (24,26) gestützt ist, das jede Plattform (14,15) ferner über ein Gelenklager (16,18) an einer zweiten Schwinge (21,23) gelagert ist, deren, dem Gelenklager (16,18) abgekehrtes Ende in einem ortsfest angeordneten Lager (25,27) gestützt ist, dass die Enden der Koppelstange (13) über Gelenklager (13",13"') mit jeweils einer Plattform (14,15) in Verbindung stehen und dass die Pleuelstange (29) über ein Gelenk (28) mit der ersten Schwinge (20) einer der Getriebeeinheiten in Verbindung steht.

2. Vorrichtung zum gruppenweisen Überschieben von auf einem ersten horizontalen Förderband (1) in einer Reihe hintereinander angeordneten Gegenständen (6) auf ein zweites horizontales, sich senkrecht zu dem ersten erstreckendes Förderband (2), mit einem zum gleichzeitigen Überschieben jeweils einer Gruppe der Gegenstände (6) bestimmten Schiebebalken (7), so dass auf dem zweiten Förderband (2) eine Reihe von hintereinander angeordneten Gruppen bestehend aus den genannten Gegenständen gebildet wird, wobei die genannten Gegenstände in jeder Gruppe in einer Reihe quer zu der Förderrichtung (5) des zweiten Förderbandes (2) angeordnet sind und mit einem, mit einer Stützstruktur (52) für den Schiebebalken (7) in Wirkverbindung stehenden Getriebe, welches bei gleichförmigen Geschwindigkeiten der beiden Förderbänder (1,2) zur Darstellung einer zumindest teilweise als Überführungkurve für die genannten Gegenstände beginnend auf dem ersten Förderband (1) und endend auf dem zweiten Förderband (2) nutzbaren Bewegungskurve des Schiebebalkens (7) unter Beibehaltung einer Parallelstellung des Schiebebalkens (7) zu dem ersten Förderband (1) eingerichtet ist, wobei das Getriebe aus wenigstens zwei, untereinander gleich beschaffenen Getriebeeinheiten (48,49) besteht, wobei jede Getriebeeinheit (48,49) mit einem Anbindungspunkt (50,51) für die Stützstruktur (52) versehen ist, wobei die Bewegungen der beiden Getriebeeinheiten (48,49) synchronisiert sind, wobei dem Getriebe zumindest ein Antrieb (30,31') zugeordnet ist, der über eine Pleuelstange (29) mit einer Getriebeeinheit (48) in Antriebsverbindung steht und wobei zur Synchronisation der Bewegungen der Getriebeeinheiten (35,36) diese über eine Koppel- stange (13) in Verbindung stehen, mittels welcher die genannte Über- führungskurve darstellbar ist **dadurch gekennzeichnet, dass** jede Getriebeeinheit (48,49) ein an ihrem einen Ende in einem Lager (42) ortsfest gelagerte, an ihrem anderen Ende über ein Gelenk (43) mit einem Zwischenhebel (44) in Verbindung stehende erste Schwinge (41) aufweist, wobei die erste Schwinge (41) zwischen ihren genannten Enden über ein Gelenk (40) mit der Pleuelstange (29) des Antriebs (31,31') in Verbindung steht, dass an der ersten Schwinge (41) ein sich unter einem Winkel zu dieser erstreckender Hebel (46) fest angeordnet ist, wobei ein Gelenk (47), welches den Anbindungspunkt der Koppelstange (13) bildet, sich an dem Ende des Hebels (46) befindet, dass der Zwischenhebel (44) über ein Gelenk (45) mit dem einen Ende einer zweiten Schwinge (21) in Verbindung steht, deren anderes Ende in einem Lager (25) ortsfest gelagert ist und dass sich die Anbindungspunkte (50,51) für die Stützstruktur (52) des Schiebebalkens (7) auf den Zwischenhebeln (44) befinden.

3. Vorrichtung nach einem der Ansprüche 1 oder 2, **dadurch gekennzeichnet, dass** der Schiebebalken (7) zusätzlich um eine, sich parallel zu dem Förderband (1) erstreckende Achse (13',54) schwenkbar angeordnet ist, und dass ein zusätzlicher Antrieb (12') vorgesehen ist, der dazu eingerichtet ist, den Schiebebalken (7) an dem Ende der Überführungskurve um diese Achse (13',54) in Richtung auf den Beginn der Überführungskurve hin zu verschwenken.

4. Vorrichtung nach Anspruch 3, **dadurch gekennzeichnet, dass** der Schiebebalken (7) um die Achse der Koppelstange (13) schwenkbar ist.

5. Vorrichtung nach Anspruch 3 oder 4, **dadurch gekennzeichnet, dass** eine Schwenkkurve des Schiebebalkens (7) mit der Maßgabe angelegt ist, dass eine kontinuierliche nachfolgende Förderung der Gegenstände (6) auf dem Förderband (1) während des Überschiebens einer Gruppe der genannten Gegenstände nicht behindert wird.

6. Vorrichtung nach einem der Ansprüche 1 bis 5, **dadurch gekennzeichnet, dass** die Bewegungskurve des Schiebebalkens (7) eine in sich geschlossene Kurve ist.

7. Vorrichtung nach einem der Ansprüche 1 oder 3 bis 6, **dadurch gekennzeichnet, dass** jede der Plattformen (14,15) mit drei achsparallelen Gelenklagern (13",16,17;13"',18,19) versehen ist, über welche diese mit den Schwingen (20,21;22,23) sowie der Koppelstange (13) in Verbindung stehen.

8. Vorrichtung nach einem der Ansprüche 3 bis 7, **dadurch gekennzeichnet, dass** der zusätzliche Antrieb (12') entlang der Überführungskurve beweglich angeordnet ist.

9. Vorrichtung nach einem der Ansprüche 1 bis 8, **dadurch gekennzeichnet, dass** die Drehzahl des Antriebes (31') an die Fördergeschwindigkeit des Förderbandes (1) mit der Maßgabe anpassbar ist, dass sich der Schiebebalken (7) zu dem Beginn einer Überschiebebewegung zumindest angenähert geschwindigkeits- und richtungsgleich mit dem Förderband (1) bewegt.

10. Vorrichtung nach einem der vorangegangenen Ansprüche 3 bis 9 **gekennzeichnet durch** eine steuerungstechnische Verknüpfung der Antriebe (31',12') mit der Maßgabe, dass über den zusätzlichen Antrieb (12') eine Schwenkbewegung an einem definierten Punkt der Bewegungskurve des Schiebebalkens (7) um die Achse (13') eingeleitet wird, welche der durch das Getriebe bewirkten, in einer Horizontalebene angeordneten Bewegungskurve überlagert ist.

## Claims

1. Device for transferring groups of articles (6), which are disposed one behind the other in a row on a first horizontal conveyor belt (1), onto a second horizontal conveyor belt (2) extending perpendicularly with respect to the first conveyor belt, having a sliding beam (7) intended for simultaneously transferring in each case one group of the articles, so that a row of groups disposed one behind the other and consisting of the said articles is formed on the second conveyor belt (2), wherein the said articles in each group are disposed in a row transverse to the direction of conveyance (5) of the second conveyor belt (2), and having a transmission which is operatively connected to a support structure (7',8,9) for the sliding beam (7) and which at uniform speeds of the two conveyor belts (1,2) is arranged for producing a movement curve of the sliding beam (7), which can be used at least partially as a transfer curve for the said articles beginning on the first conveyor belt (1) and ending on the second conveyor belt (2), whilst maintaining a parallel position of the sliding beam (7) with respect to the first conveyor belt (1), wherein the transmission consists of at least two mutually identically configured transmission units (35,36), wherein each transmission unit (35,36) is provided with a connection point (13", 13"') for the support structure (7',8,9), wherein the movements of the transmission units (35,36) are synchronised, wherein the transmission is allocated at least one drive (31,31) which is drivingly connected to a transmission unit (35) via a connecting rod (29), wherein in order to synchronise the movements of the transmission units (35,36) they are connected via a coupling bar (13) by means of which the said transfer curve can be produced, and wherein the support structure (7',8,9) of the sliding beam (7) is supported on the coupling bar (13), **characterised in that** each of the transmission units (35,36) consists of a platform (14,15) which is mounted via a hinge bearing (17,19) on a first rocker arm (20,22), whose respective one end facing away from the hinge bearing (17,19) is supported in bearings (24,26) disposed in a positionally fixed manner, that each platform (14,15) is also mounted via a hinge bearing (16,18) on a second rocker arm (21,23) whose end facing away from the hinge bearing (16,18) is supported in a bearing (25,27) disposed in a positionally fixed manner, that the ends of the coupling bar (13) are connected via hinge bearings (13",13"') to a respective platform (14,15), and that the connecting rod (29) is connected via a hinge (28) to the first rocker arm (20) of one of the transmission units.

2. Device for transferring groups of articles (6), which are disposed one behind the other in a row on a first horizontal conveyor belt (1), onto a second horizontal conveyor belt (2) extending perpendicularly with respect to the first conveyor belt, having a sliding beam (7) intended for simultaneously transferring in each case one group of the articles (6), so that a row of groups disposed one behind the other and consisting of the said articles is formed on the second conveyor belt (2), wherein the said articles in each group are disposed in a row transverse to the direction of conveyance (5) of the second conveyor belt (2), and having a transmission which is operatively connected to a support structure (52) for the sliding beam (7) and which at uniform speeds of the two conveyor belts (1,2) is arranged for producing a movement curve of the sliding beam (7) which can be used at least partially as a transfer curve for the said articles beginning on the first conveyor belt (1) and ending on the second conveyor belt (2), whilst maintaining a parallel position of the sliding beam (7) with respect to the first conveyor belt (1), wherein the transmission consists of at least two mutually identically configured transmission units (48,49), wherein each transmission unit (48,49) is provided with a connection point (50,51) for the support structure (52), wherein the movements of the two transmission units (48,49) are synchronised, wherein the transmission is allocated at least one drive (30,31') which is drivingly connected to a transmission unit (48) via a connecting rod (29), and wherein in order to synchronise the movements of the transmission units (35,36) they are connected via a coupling bar (13) by means of which the said transfer curve can be produced, **characterised in that** each transmission unit (48,49) comprises a first rocker arm (41) which at one end is mounted in a positionally fixed manner in a bearing (42) and at its other end is connected via a hinge (43) to an intermediate lever (44), wherein the first rocker arm (41) is connected between its said ends to the connecting rod (29) of the drive (31,31') via a hinge (40), that on the first rocker arm (41) a lever (46) extending at an angle thereto is fixedly disposed, wherein a hinge (47) which forms the connection point of the coupling bar (13) is located on the end of the lever (46), that the intermediate lever (44) is connected via a hinge (45) to one end of a second rocker arm (21), whose other end is mounted in a positionally fixed manner in a bearing (25), and that the connection points (50, 51) for the support structure (52) of the sliding beam (7) are located on the intermediate levers (44).

3. Device as claimed in any one of claims 1 or 2, **characterised in that** in addition the sliding beam (7) is disposed so as to be pivotable about an axis (13',54) which extends in parallel with the conveyor belt (1), and that an additional drive (12') is provided which is arranged to pivot the sliding beam (7) at the end of the transfer curve about this axis (13',54) in the direction of the beginning of the transfer curve.

4. Device as claimed in claim 3, **characterised in that** the sliding beam (7) can be pivoted about the axis of the coupling bar (13).

5. Device as claimed in claim 3 or 4, **characterised in that** a pivot curve of the sliding beam (7) is applied with the proviso that a continuous successive conveyance of the articles (6) on the conveyor belt (1) is not hindered during the transfer of a group of the said articles.

6. Device as claimed in any one of claims 1 to 5, **characterised in that** the movement curve of the sliding beam (7) is a closed curve.

7. Device as claimed in any one of claims 1 or 3 to 6, **characterised in that** each of the platforms (14,15) is provided with three axis-parallel hinge bearings (13",16,17;13"',18,19), via which they are connected to the rocker arms (20,21;22,23) and the coupling bar (13).

8. Device as claimed in any one of claims 3 to 7, **characterised in that** the additional drive (12') is disposed so as to be movable along the transfer curve.

9. Device as claimed in any one of claims 1 to 8, **characterised in that** the rotational speed of the drive (31') can be adapted to the conveying speed of the conveyor belt (1) with the proviso that at the beginning of a transfer movement the sliding beam (7) moves at least approximately at the same speed and in the same direction as the conveyor belt (1).

10. Device as claimed in any one of the preceding claims 3 to 9, **characterised by** control-engineering linkage of the drives (31',12') with the proviso that by means of the additional drive (12') a pivot movement is initiated at a defined point of the movement curve of the sliding beam (7) about the axis (13'), which is superimposed upon the movement curve which is produced by the transmission and is disposed in a horizontal plane.

## Revendications

1. Dispositif pour faire avancer par groupes des objets (6) agencés l'un derrière l'autre en rangée à partir d'une première bande transporteuse horizontale (1) sur une seconde bande transporteuse horizontale (2) s'étendant perpendiculairement à la première bande transporteuse, comprenant une barre pousseuse (7) destinée au transfert simultané respectivement d'un groupe d'objets, de manière à former sur la seconde bande transporteuse (2) un alignement en rangée des objets cités, constitués en groupes et agencés l'un derrière l'autre, dans lequel les objets cités de chaque groupe d'une rangée sont agencés transversalement à la direction de transport (5) de la seconde bande transporteuse (2), et une transmission en liaison fonctionnelle avec une structure d'appui (7', 8, 9) pour la barre pousseuse (7), transmission qui, dans le cas de vitesses égales des deux bandes transporteuses (1, 2), est aménagée pour assurer une courbe de déplacement de la barre pousseuse (7) utilisable au moins en partie comme courbe de transfert pour les objets cités partant de la première bande transporteuse (1) pour se terminer sur la seconde bande transporteuse (2) tout en maintenant une position parallèle de la barre pousseuse (7) par rapport à la première bande transporteuse (1), dans lequel la transmission se compose d'au moins deux unités de transmission (35, 36) formées de manière identique l'une en dessous de l'autre, dans lequel chaque unité de transmission (35, 36) est dotée d'un point de raccordement (13", 13"') pour la structure d'appui (7', 8, 9), dans lequel les mouvements des unités de transmission (35, 36) sont synchronisés,
dans lequel il est affecté à la transmission au moins un entraînement (31, 31) qui est en liaison d'entraînement via une bielle motrice (29) avec une unité de transmission (35), dans lequel, pour synchroniser les mouvements des unités de transmission (35, 36), celles-ci sont reliées par une barre de couplage (13), au moyen de laquelle la courbe de transfert citée peut être assurée, et dans lequel la structure d'appui (7', 8, 9) de la barre pousseuse (7) s'appuie sur la barre de couplage (13), **caractérisé en ce que** chacune des unités de transmission (35, 36) est constituée d'une plate-forme (14, 15) qui est montée via une articulation à rotule (17, 19) sur une première bielle oscillante (20, 22), dont l'une des extrémités respectives opposée à l'articulation à rotule (17, 19) s'appuie sur des paliers (24, 26) agencés fixes, **en ce que** chaque plate-forme (14, 15) est montée en outre via une articulation à rotule (16, 18) sur une seconde bielle oscillante (21, 23), dont l'extrémité opposée à l'articulation à rotule (16, 18) s'appuie sur un palier (25, 27) agencé fixe, **en ce que** les extrémités de la barre de couplage (13) sont reliés via une articulation à rotule (13", 13"') avec une plate-forme respective (14, 15) et **en ce que** la bielle motrice (29) est reliée par le biais d'une articulation (28) avec la première bielle oscillante (20) d'une des unités de transmission.

2. Dispositif pour faire avancer par groupes des objets (6) agencés en l'un derrière l'autre en rangée à partir d'une première bande transporteuse horizontale (1) sur une seconde bande transporteuse horizontale (2) s'étendant perpendiculairement à la première bande transporteuse, comprenant une barre pousseuse (7) destinée au transfert simultané respectivement d'un groupe d'objets (6) de manière à former sur la seconde bande transporteuse (2) un alignement en rangée des objets cités, constitués en groupes et agencés l'un derrière l'autre, dans lequel les objets cités de chaque groupe d'une rangée sont agencés transversalement à la direction de transport (5) de la seconde bande transporteuse (2) et une transmission en liaison fonctionnelle avec une structure d'appui (52) pour la barre pousseuse (7) qui, dans le cas de vitesses égales des deux bandes transporteuses (1, 2), est aménagée pour assurer une courbe de déplacement de la barre pousseuse (7) utilisable au moins en partie comme courbe de transfert pour les objets cités en partant de la première bande transporteuse (1) pour terminer sur la seconde bande transporteuse (2) tout en maintenant une position parallèle de la barre pousseuse (7) par rapport à la première bande transporteuse (1), dans lequel la transmission se compose d'au moins deux unités de transmission (48, 49) formées de manière identique l'une en dessous de l'autre, dans lequel chaque unité de transmission (48, 49) est dotée d'un point de raccordement (50, 51) pour la structure d'appui (52),
dans lequel les mouvements des unités de transmission (48, 49) sont synchronisés, dans lequel il est affecté à la transmission au moins un entraînement (30, 31') qui est en liaison d'entraînement via une bielle motrice (29) avec une unité de transmission (48), et dans lequel, pour synchroniser les mouvements des unités de transmission (35, 36), celles-ci sont reliées par une barre de couplage (13), au moyen de laquelle la courbe de transfert citée peut être assurée, **caractérisé en ce que** chaque unité de transmission (48, 49) présente une première bielle oscillante (41) montée fixe à la première extrémité dans un palier (42) et reliée à l'autre extrémité par une articulation (43) avec un levier intermédiaire (44), dans lequel la première bielle oscillante (41) est liée entre ses extrémités citées par une articulation (40) avec la bielle motrice (29) de l'entraînement (31, 31'), **en ce qu'**il est agencé fixe sur la première bielle oscillante (41) un levier (46) s'étendant sous un certain angle par rapport à celle-ci, dans lequel une articulation (47) formant le point de raccordement de la barre de couplage (13) se trouve à l'extrémité du levier (46), **en ce que** le levier intermédiaire (44) est relié par une articulation (45) avec la première extrémité d'une seconde bielle oscillante (21), dont l'autre extrémité est montée fixe dans un palier (25) et **en ce que** les points de raccordement (50, 51) pour la structure d'appui (52) de la barre pousseuse (7) se trouvent sur les leviers intermédiaires (44).

3. Dispositif selon l'une quelconque des revendications 1 ou 2, **caractérisé en ce que** la barre pousseuse (7) est agencée en outre à pivotement autour d'un axe (13',54) s'étendant parallèlement à la bande transporteuse (1) et **en ce qu'**il est prévu un entraînement supplémentaire (12') qui est aménagé pour faire pivoter la barre pousseuse (7) à l'extrémité de la courbe de transfert autour de cet axe (13', 54) en direction du début de la courbe de transfert.

4. Dispositif selon la revendication 3, **caractérisé en ce que** la barre pousseuse (7) peut pivoter autour de l'axe de la barre de couplage (13).

5. Dispositif selon la revendication 3 ou 4, **caractérisé en ce qu'**une courbe de pivotement de la barre pousseuse (7) est appliquée en faisant en sorte qu'un transport successif continu des objets (6) sur la bande transporteuse (1) ne soit pas empêché pendant l'avancement d'un groupe des objets cités.

6. Dispositif selon l'une quelconque des revendications 1 à 5, **caractérisé en ce que** la courbe de déplacement de la barre pousseuse (7) est une courbe fermée en soi.

7. Dispositif selon l'une quelconque des revendications 1 ou 3 à 6, **caractérisé en ce que** chacune des plates-formes (14, 15) est pourvue de trois articulations à rotule (13", 16, 17 ; 13"', 18, 19) parallèles à l'axe, par le biais desquelles celles-ci sont en liaison avec les bielles oscillantes (20, 21 ; 22, 23) et la barre de couplage (13).

8. Dispositif selon l'une quelconque des revendications 3 à 7, **caractérisé en ce que** l'entraînement supplémentaire (12') est agencé mobile le long de la courbe de transfert.

9. Dispositif selon l'une quelconque des revendications 1 à 8, **caractérisé en ce que** le nombre de tours de l'entraînement (31') peut être adapté à la vitesse de transport de la bande transporteuse (1) en faisant en sorte que la barre pousseuse (7) se déplace, au commencement d'un mouvement de transfert, à une vitesse et dans une direction au moins presque égales à celles de la bande transporteuse (1).

10. Dispositif selon l'une quelconque des revendications précédentes 3 à 9, **caractérisé par** une liaison technique de commande des entraînements (31', 12') en faisant en sorte que, via l'entraînement supplémentaire (12'), il soit introduit un mouvement de pivotement en un point défini de la courbe de déplacement de la barre pousseuse (7) autour de l'axe (13'), qui se superpose à la courbe de déplacement provoquée par la transmission et agencée dans un plan horizontal.
